# EUROPEAN PATENT APPLICATION

(11) **EP 4 209 955 A1**
(43) Date of publication of application: **12.07.2023**
(21) Application number: 22150819.5
(22) Date of filing: 10.01.2022
(51) Int. Cl.: G06F 30/23, G06F 113/10, G06F 119/14

(54) **COMPUTER-IMPLEMENTED METHOD OF DESIGNING OF A COMPONENT**

(71) Applicant: Panopoulos, Spyros, 13672 Acharnes (GR)
(72) Inventor: Panopoulos, Spyros, 13672 Acharnes (GR)
(74) Representative: Kouzelis, Dimitrios

(57) **Abstract**

The present invention relates to a computer-implemented method of designing a component (1), in particular a moving component (1). The method comprises a step (100) of creating a two-dimensional geometric model of the component (1) as a two-dimensional truss, a step (200) of performing a two-dimensional finite element analysis to optimise the two-dimensional geometric model of the component (1), a step (300) of creating a three-dimensional geometric model of the component (1) based on the optimized two-dimensional geometric model, and a step (400) of performing a three-dimensional finite element analysis to optimise the three-dimensional geometric model.

## Description

The present disclosure relates to a computer-implemented method of designing a component, in particular a moving component. Further, the invention relates to an additive manufacturing method of a component that is designed according to said computer-implemented method.

Design methods with the use of a computer have been used for designing a component in the automotive industry, as they can result in an increase of productivity, an improvement of accuracy and quality of the designed components and a reduction of errors.

An object of the present disclosure is to provide a computer-implemented method of designing a component, in particular a moving component, with which an optimal and time-efficient design of the component can be achieved.

The solution to this object is achieved by the subject matter of the independent claim.

In the following, a computer-implemented method of designing a component, in particular a moving component which can be used amongst others in the automotive industry, is disclosed. The method comprises a step of creating a two-dimensional geometric model of the component as a two-dimensional truss, a step of performing a two-dimensional finite element analysis to optimise the two-dimensional geometric model of the component, a step of creating a three-dimensional geometric model of the component based on the optimized two-dimensional geometric model, and a step of performing a three-dimensional finite element analysis to optimise the three-dimensional geometric model. Due to the design of the component in two stages, in particular a first stage, where a two-dimensional geometric model of the component is optimized, and a second stage, where a three-dimensional geometrical model of the component is optimized based on the optimized two-dimensional geometrical model, an optimal and time-efficient design of the component can be achieved. Further, due to the fact that the two-dimensional geometric model is formed as truss, the process of designing the component is simplified. In the framework of the present invention, the design of a component may comprise the design of only a portion of the component or of the whole component.

The component is preferably a mechanical component. Within the scope of the present invention, a mechanical component is in particular considered as a component that is made, performed, or operated by or as if by a machine or machinery, and/or concerned with a machine or machinery and/or relating to or controlled or operated by physical forces. The mechanical component can advantageously comprise a gear, a crankshaft, a piston, a brake, a sprocket, a bearing, a flywheel or a shaft.

Further, within the scope of the present invention, the term "component" may be replaced by the term "element".

It is noted that the term "moving component" particularly means that the component is moving when it is in its predetermined/intended operating state. In particular, the component is moving relative to a further component to which it is attached. For example, a moving automotive component may be a connecting rod of an engine, which is moving relative to a crankshaft and a piston in its predetermined operating state (of the connecting rod). Further, a piston can for example be a further automotive component that can be designed according to the method of the present invention.

Preferably, the creation of a three-dimensional geometric model may comprise the creation of a three-dimensional truss. In this case, the finite element analysis performed for optimising the three-dimensional geometric model is performed for the three-dimensional truss. The present method preferably comprises further the step of creating from the optimised three-dimensional truss a solid three-dimensional body (a solid three-dimensional geometric body having mass/defining a volume contrary to the three-dimensional truss). The solid three-dimensional body corresponds to the designed component.

Alternatively, a solid three-dimensional body may directly be created from the two-dimensional geometric model. This can preferably be done by an extrusion and/or boss and/or base and/or revolve and/or swept-along-a-path operation. In this case, the finite element analysis performed for optimising the three-dimensional geometric model is performed for the solid-three-dimensional geometric model. The optimised solid three-dimensional body corresponds to the designed component.

The final shape and/or mass of the solid three-dimensional body is preferably determined in dependence of the material of the designed component.

Preferably, the step of performing the two-dimensional finite element analysis to optimise the two-dimensional geometric model of the component is executed for satisfying strength requirements for the component. Thus, weak points can be identified after the two-dimensional finite element analysis so that the two-dimensional geometric model can be adapted.

Preferably, the step of performing the three-dimensional finite element analysis to optimise the three-dimensional geometric model of the component is executed for satisfying strength requirements for the component, and preferably also for minimising weight. Thus, weak points can be identified after the three-dimensional finite element analysis so that the three-dimensional geometric model can be adapted. Preferably, the adaptation of the three-dimensional geometric model takes into account not only the strength requirements but also the weight of the component.

Advantageously, the step of performing the two-dimensional and/or the three-dimensional finite element analysis comprises the following sub steps:
a. defining nodes,
b. defining truss elements based on the nodes,
c. defining the cross-sections of the truss elements,
d. defining the material properties assigned to the truss elements,
e. defining supports of the truss,
f. defining loads on the truss,
g. defining the type of analysis,
h. assembling the global stiffness matrix,
i. defining boundary conditions,
   and/or
j. calculating nodal displacements,
k. calculating deformations of the truss elements,
l. calculating stresses in the truss elements,
m. calculating forces in the truss elements,
n. calculating support reactions,
   and preferably also
o. calculating the weight of the component.

The definition of the corresponding aforementioned parameters "a" to "i" is preferably executed in a finite element pre-processor, wherein the calculation of the corresponding aforementioned parameters "j" to "o" is preferably done in a finite element solver. In the case of the two-dimensional finite element analysis, a two-dimensional truss solver is advantageously used. In the case of the three-dimensional finite element analysis, a three-dimensional finite element solver is advantageously used. When the three-dimensional geometric model is a three-dimensional truss, the three-dimensional finite element solver is a three-dimensional truss solver.

The choice of the material is made based on the function and/or arrangement of the component, the interaction with other parts and/or the conditions under which the component will be operating in its predetermined/intended operating state.

Preferably, the two-dimensional finite element analysis is performed at least two times. A result of the first time of execution of the two-dimensional finite element analysis is used for the second time that the two-dimensional finite element analysis is performed.

Preferably, the three-dimensional finite element analysis is performed at least two times. A result of the first time is used for the second time that the three-dimensional finite element analysis is performed.

The step of creating a three-dimensional geometric model of the component preferably comprises importing the optimized two-dimensional geometric model into a CAD system, wherein the optimized two-dimensional geometric model is automatically transformed to a three-dimensional geometric model.

The two-dimensional geometric model and/or the three-dimensional geometric model can be imported into a finite element program for performing the two-dimensional finite element analysis or the three-dimensional finite element analysis, respectively.

Alternatively, the two-dimensional geometric model and/or the three-dimensional geometric model can be created in a finite element program for performing the finite element analysis.

The present invention further relates to a data processing apparatus comprising means for carrying out the steps of method of any of the preceding claims.

Another aspect of the present invention lies in a computer program, comprising instructions, which, when the program is executed by a computer, cause the computer to carry out the steps of the previously defined computer-implemented method.

A further aspect of the present invention relates to a computer-readable storage medium comprising instructions which, when executed by a computer, cause the computer to carry out the previously defined computer-implemented method.

Further, the present invention relates to a method of additive manufacturing of a component, in particular of a moving component, that is designed according to the previously defined computer-implemented method. The additive manufacturing method comprises the step of additive manufacturing of the component.

Further, the present invention relates to a component designed according to the previously defined computer-implemented method and/or manufactured by the previously defined additive manufacturing method. These and further details, advantages and features of the present invention will be described based on the following description of an embodiment of the invention and by taking reference to the accompanying figures, wherein:
figure 1 shows a flow diagram of a computer-implemented method of designing a component, in particular an automotive component, according to an embodiment of the present invention, and
figure 2 shows an automotive component that is designed according to the computer-implemented method of the present invention and manufactured by an additive manufacturing method.

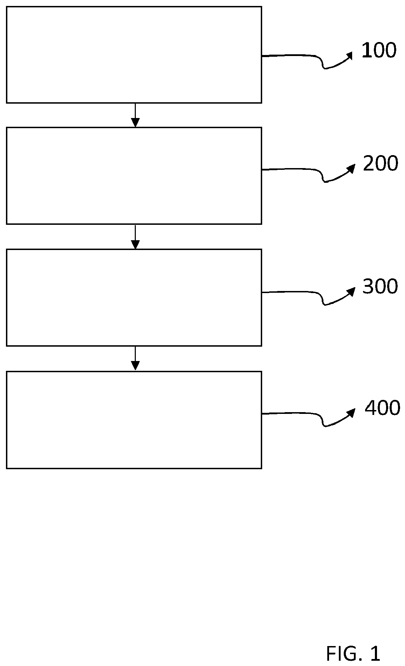

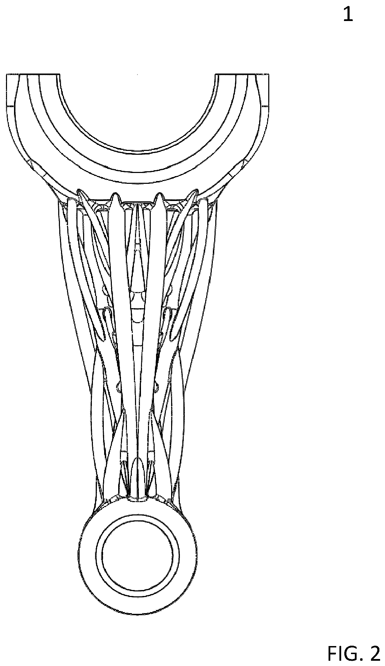

In the following, a computer-implemented method of designing a component 1 according to an embodiment of the present invention is described in detail with reference to figures 1 and 2.

As can be seen from figure 2, the component 1 is an automotive component, in particular a connecting rod of an engine that is configured to connect a piston to a crankshaft in order to convert the reciprocating motion of the piston into the rotation of the crankshaft. In the following, reference is directly made to the automotive component as automotive component 1.

Referring now to figure 1, in a first step 100 of the design method, a two-dimensional geometric model of the automotive component 1 is created as a two-dimensional truss.

In a second step 200 of the design method, a two-dimensional finite element analysis is performed to optimise the two-dimensional geometric model of the automotive component 1 for satisfying its strength requirements.

To this end, the two-dimensional finite element analysis is performed at least two times, preferably multiple times. During this procedure, a result of a preceding execution of the two-dimensional finite element analysis is used for the immediately following execution. In other words, the immediately following execution is based on the result of the preceding execution of the two-dimensional finite element analysis.

In particular, weak points of the two-dimensional geometric model in view of the strength requirements that the automotive component 1 must fulfil in its predetermined operation state are identified after each execution. Based on that, parameters of the finite element analysis, in particular the cross-sections of the truss elements, and/or dimensions and/or the shape of the two-dimensional geometric model, can be adapted. Thereby, an optimized two-dimensional geometric model of the automotive component can be obtained. The adapted parameters of the finite element analysis and/or the adapted two-dimensional geometric model are used for the immediately following finite element analysis.

The two-dimensional finite element analysis is performed as many times as needed in order to obtain an optimized two-dimensional geometric model that fulfils the strength requirements of the automotive component 1.

In a third step 300 of the design method, a three-dimensional geometric model of the automotive component 1 may automatically be created as a three-dimensional truss based on the optimized two-dimensional geometric model obtained in the second step 200.

In a fourth step 400, a three-dimensional finite element analysis to optimise the three-dimensional geometric model is performed.

Similar to step 200, weak points of the three-dimensional geometric model in view of the strength requirements that the automotive component 1 must fulfil in its predetermined operation state in connection with the requirement of weight minimization are identified after each execution. Based on that, parameters of the finite element analysis, in particular the cross-sections of the truss elements, and/or dimensions and/or the shape of the two-dimensional geometric model, can be adapted. Thereby, an optimized two-dimensional geometric model of the automotive component can be obtained. The adapted parameters of the finite element analysis and/or the adapted two-dimensional geometric model are used for the immediately following finite element analysis.

The three-dimensional finite element analysis is performed as many times as needed in order to obtain an optimized three-dimensional geometric model that fulfils the strength and weight requirements of the automotive component 1.

The step 200 of performing the two-dimensional finite element analysis and the step 400 of performing the three-dimensional finite element analysis comprises the definition of nodes, truss elements based on the nodes, the cross-sections of the truss elements, the material properties assigned to the truss elements, supports of the truss, loads on the truss, the type of analysis (for example static, dynamic etc.) and boundary conditions, and the assembly of the global stiffness matrix. Through each execution of the two-dimensional and three-dimensional finite element analysis, nodal displacements, deformations of the truss elements, stresses in the truss elements, forces in the truss elements and support reactions are calculated. Based on these calculated parameters, the aforementioned weak points can be identified.

The optimised three-dimensional truss is then transformed to a solid three-dimensional body. The solid three-dimensional body corresponds then to the designed automotive component 1. Alternatively, a solid three-dimensional body may directly be created from the optimised two-dimensional truss. In this case, the three-dimensional geometric model corresponds to the solid three-dimensional body. The finite element analysis to optimise the three-dimensional geometric model is performed for the solid three-dimensional body. The optimised solid three-dimensional body corresponds to the designed automotive component 1.

In the three-dimensional finite element analysis, the weight of the automotive component 1 is also calculated.

When the automotive component 1 is designed, it is manufactured by means of additive manufacturing (3D printing).

## Claims

1. A computer-implemented method of designing a component (1), in particular a moving component (1), comprising:
• a step (100) of creating a two-dimensional geometric model of the component (1) as a two-dimensional truss,
• a step (200) of performing a two-dimensional finite element analysis to optimise the two-dimensional geometric model,
• a step (300) of creating a three-dimensional geometric model of the component (1) based on the optimized two-dimensional geometric model, and
• a step (400) of performing a three-dimensional finite element analysis to optimise the three-dimensional geometric model.

2. The method of claim 1, wherein the step (200) of performing the two-dimensional finite element analysis to optimise the two-dimensional geometric model of the component (1) is executed for satisfying strength requirements for the component (1).

3. The method of claim 1 or 2, wherein the step (400) of performing the three-dimensional finite element analysis to optimise the three-dimensional geometric model of the component (1) is executed for satisfying strength requirements for the component (1), and preferably also for minimising weight.

4. The method of any of the preceding claims, wherein the step of creating the three-dimensional geometric model comprises creating a three-dimensional truss which is then preferably transformed to a solid three-dimensional body or wherein the step of creating the three-dimensional geometric model comprises directly creating a solid three-dimensional body from the two-dimensional truss.

5. The method of any of the preceding claims, wherein the step (200) of performing the two-dimensional finite element analysis and/or the step (400) of performing the three-dimensional finite element analysis comprises the following sub steps:
a. defining nodes,
b. defining truss elements based on the nodes,
c. defining the cross-sections of the truss elements,
d. defining the material properties assigned to the truss elements,
e. defining supports of the truss,
f. defining loads on the truss,
g. defining the type of analysis,
h. assembling the global stiffness matrix,
i. defining boundary conditions,
and/or
j. calculating nodal displacements,
k. calculating deformations of the truss elements,
l. calculating stresses in the truss elements,
m. calculating forces in the truss elements,
n. calculating support reactions,
and preferably also
o. calculating the weight of the component (1).

6. The method of any of the preceding claims, wherein the two-dimensional finite element analysis is performed at least two times, wherein a result of the first time is used for the second time
and/or
the three-dimensional finite element analysis is performed at least two times, wherein a result of the first time is used for the second time.

7. The method of any of the preceding claims, wherein the step of creating a three-dimensional geometric model of the component (1) comprises importing the optimized two-dimensional geometric model into a CAD system, wherein the optimized two-dimensional geometric model is automatically transformed to the three-dimensional geometric model.

8. The method of any of the preceding claims, wherein the two-dimensional geometric model and/or the three-dimensional geometric model is/are imported into or created in a finite element program for performing the finite element analysis.

9. The method of any of the preceding claims, wherein the component is a mechanical component.

10. The method of any of the preceding claims, wherein the component is an automotive component.

11. A data processing apparatus comprising means for carrying out the steps of method of any of the preceding claims.

12. A computer program, comprising instructions which, when the program is executed by a computer, cause the computer to carry out the steps of the method of any of claims 1to 10.

13. A computer-readable storage medium comprising instructions which, when executed by a computer, cause the computer to carry out the method of any of claims 1 to 10.

14. A method of additive manufacturing of a component (1), in particular of a moving component (1), designed according to the method of any of the claims 1 to 10, comprising the step of additive manufacturing of the component (1).
